# EUROPEAN PATENT SPECIFICATION

(11) **EP 1 947 425 B1**
(45) Date of publication and mention of the grant of the patent: **28.02.2018**
(21) Application number: 07016623.6
(22) Date of filing: 24.08.2007
(51) Int. Cl.: G01D 11/28, G01D 13/26

(54) **Velocity indicator for vehicle**
Geschwindigkeitsanzeiger für ein Fahrzeug
Indicateur de vitesse pour véhicule

(30) Priority: 18.01.2007 DE 102007003355
(43) Date of publication of application: 23.07.2008
(73) Proprietor: Johnson Controls Technology Company, Milwaukee, WI 53209 (US)
(72) Inventor: Süss, Manfred, 75196 Remchingen (DE); Voillot, Stéphane, 95800 Courdimanche (FR); Croy, Jean-Luc, 94450 Limeil Brevannes (FR)
(74) Representative: Kutzenberger Wolff & Partner

(56) References cited:
- FR-A- 2 874 265
- US-A- 3 909 670
- US-B1- 6 408 783

## Description

The invention relates to a pointer velocity indicator, with a reference velocity indicating device, such as those found aboard vehicles, including automotive vehicles.

The dashboard of an automotive vehicle generally comprises a proper dashboard, arranged facing the driver, comprising a set of indicators, including a velocity indicator, possibly with a pointer.

The pointer of the velocity indicator, controlled and driven into rotation by a motor, generally extends in front of a screen printed support having printed thereon indication characters (graduations and velocity values, more particularly), forming a velocity dial. The indication character support is referred to as a front face. The velocity indicator is mounted in a packing projection part, serving as a protection and as a mask and supporting a protective glass.

It has become common to wish to have a reference velocity displayed on the velocity dial, either the reference velocity of a velocity regulator or of a velocity limiter, for example. The driver can then read, on the same indicator, the actual velocity of the vehicle and the velocity to which his engine has been set, or the velocity that should not be exceeded. In such a case, such a reading should be performed both in the daytime as well as at night-time.

The prior art suggests velocity indicators wherein a set of light emitting diodes (LED) has been arranged on the periphery of the dial, the LED corresponding to the reference velocity being lighted. Implementing such a number of LEDs is however very expensive and increases considerably the cost of the dashboard.

Document WO 01/92047 provides an indicator comprising a first pointer indicating the effective vehicle velocity, extending in front of the front face, and a second, curved, pointer, indicating a reference velocity and located at the rear of the front face, of which only the end of the curved portion in the periphery of the dial can be seen. The indicator comprises a first light box, at the bottom of which are arranged, on a first printed circuit board, LEDs for lighting the effective velocity indicating pointer and the dial, and a second light box, wherein the curved pointer extends, forming a light guide, lighted by LEDs arranged on a second printed circuit board located at the rear of the second light box, and also supporting a driving motor for both pointers. Such an indicator is however very bulky, because of the depth required for the two pointer set, and the driving and lighting means thereof.

Document FR 2 874 265 teaches a velocity indicator, comprising a front face supporting a dial, a first effective velocity indicating pointer, driven into rotation in front of the dial, a second reference velocity indicating pointer, driven into rotation behind the dial, being a light conductor comprising an end portion being visible in the dial periphery, and means for lighting both pointers and the dial, the lighting means comprising one single light source common to both pointers and to the dial.

US 3,906,670 discloses an indicator having a pointer carrying a light source (LED), and means for powering the light source. Such an indicator is compact and little expensive.

However, the light source uniqueness is a solution that could, under some circumstances, be implemented to the detriment of the light quality.

The invention of the present application therefore aims at providing a solution saving LED diodes and maintaining some equipment compactness and some light quality of the indicating elements.

To this end, the invention relates to a velocity indicator according to claim 1. The indicator of the present application is different from that in document FR 2,874,265 through the substitution of one element with a set of LED diodes for a light conducting pointer. This is nearly a bold come back to the first indicator as set forth hereinabove. But, with respect to such an indicator, wherein the reference velocity is shown by a fixed diode with a corresponding angular position amongst a plurality of fixed diodes, the reference velocity, in the indicator of the present application, is shown by the corresponding angular position of a mobile diode being in circular translation.

Advantageously, both indicating elements are driven into rotation by two concentric driving shafts of a single motor.

Preferably, the second indicating element comprises a coil supporting a supplying flex for the LED diode wound on the coil core.

Advantageously, the LED diode is supplied by the flex through a printed circuit arm mounted on one of the coil flanges.

The second indicating element could comprise a first velocity selecting LED diode and a second confirming LED diode as well as some LED diodes for driving and parking aid.

This invention will be better understood by reading the following description, referring to the accompanying drawing, on which:
- Fig. 1 is a set of front views for an indicator dial according to the invention;
- Fig. 2 is a front view of the indicating dial of the invention, seen at night-time;
- Fig. 3 is a front view of the second indicating element of the indicator of this invention, before being mounted on the electronic board of the indicator;
- Fig. 4 is a profile view of the second indicating element, mounted on the electronic board of the indicator; and
- Fig. 5 is a front view of the indicator board with the second indicating element mounted thereupon.

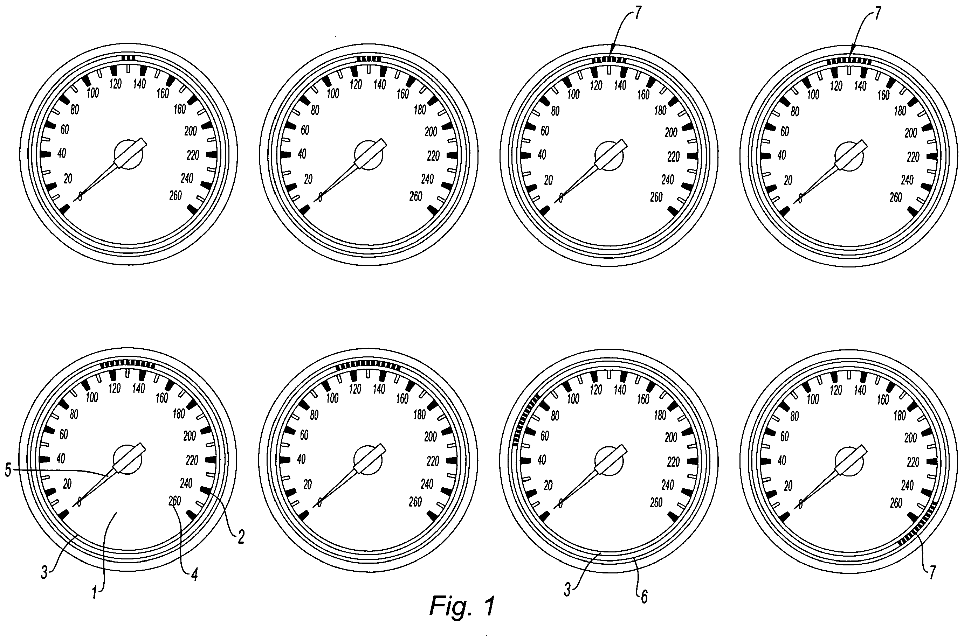

Fig. 1 shows a set of eight velocity indicating dials, on each of which there are to be seen, on the front side thereof, the circular dial 1, with graduations 2 indicating velocities, printed along the circular edge 3 of the dial, the graduations 2 (one out of two) being associated to numbers representing velocity values. These are the vehicle effective velocities. In front of the dial, there is mounted an indicating pointer 5 for pointing the vehicle effective velocity. Dials on Fig. 1 are shown for a vehicle being parked, at null velocity.

On the periphery ring band 6, along the circular edge 3 of each dial, there is shown a set of small lines representing a set of LED diodes. One of such diodes occupies an angular position, determined from the axis of the indicating pointer 5 in a rest position at null velocity, corresponding to the reference velocity, for example, that of the vehicle velocity regulator or limiter. The other LED diodes could be diodes for driving and parking aid. One of the diodes of the set could be a reference velocity selecting diode, another one, a confirming diode.

On the first dial in Fig. 1, the reference LED diode, amongst three, is positioned on the velocity of 130 km/hr; on the second dial, the reference diode, amongst five, is positioned on the same velocity of 130 km/hr, as well as that of the four following dials, amongst seven, nine, eleven and thirteen, respectively. On the last but one dial, the reference LED diode, amongst thirteen, is positioned on the velocity of 63 km/hr and that of the last dial, amongst thirteen, on 260 km/hr.

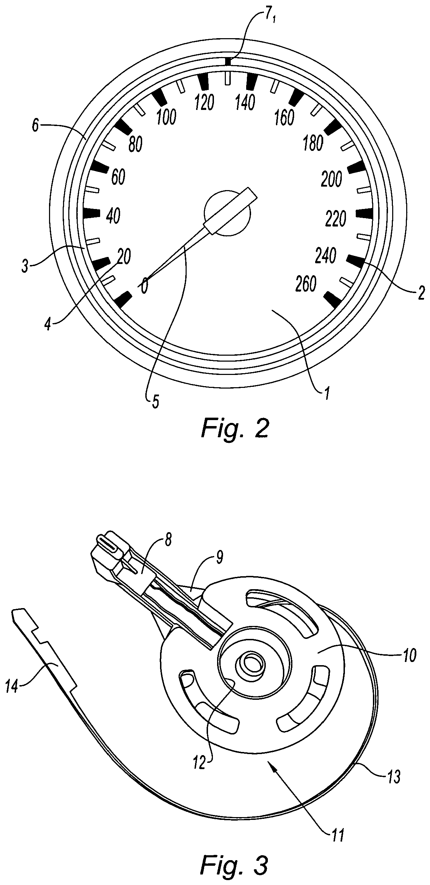

The reference and assistance diodes 7 should be visible to the driver both in day-time and at night-time. In the case where there is provided a selecting diode and a confirming diode, at night-time, while only one of such two diodes is lighted, the selecting diode 7₁ could be assigned with the colour orange (Fig. 2), the green colour being assigned to the confirming diode that the driver can switch on once the reference velocity is reached and after a click, when switching is not automatic.

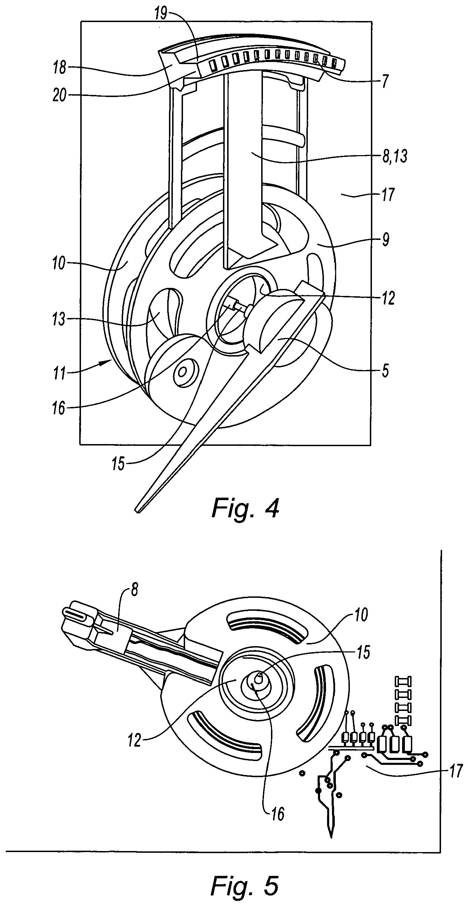

The reference and assistance diodes 7 are supported at the end of an arm 8 mounted on one of the two flanges 9, 10 of a coil 11 mounted rotationally around the same axis as the indicating pointer 5, the indicating pointer 5 and the coil 11, that could be referred to as a reference and assistance coil, being driven into rotation by two concentric shafts 15, 16 of one single motor, respectively (Fig. 4).

The coil 11, with its arm 8 supporting the set of LED diodes 7, constitutes the second indicating element of the dial.

Between both plates 9, 10 of the coil 11, on the hub 12, a flex band 13 for supplying DEL diodes 7 is wound, the end of which 14 is intended to extend on the arm 8. The flex band 13 comprises a printed circuit thereon, electrically connected with the printed circuit board 17 of the indicator (Figs 4, 5).

The end of the arm 8 supports a small light box 18 radially projecting out of the front face of the dial and extending up to its periphery. Such a light box contains the LED diode crown 7 and actually forms a light box by means of an external mask segment 19. The LED diodes are arranged along a small circle arc segment expanding the arm 8, substantially perpendicular to the latter, and on the flex band 13 shaped in the same way and supporting the diode supplying contacts.

The light box 18, with a T-shaped axial section, projects axially (20) at right angle with the diodes 7 relative to the plane of the arm 8.

Such a light box 18, with its crown of reference and assistance LED diodes 7, at the end of the arm 8, in the dial periphery, constitutes a mobile cursor around the dial as can be observed on views of Fig. 1.

## Claims

1. A velocity indicator, comprising a front face supporting a dial (1), an effective velocity indicating pointer element (5), driven into rotation in front of the dial, a reference velocity indicating element (8, 11, 7), driven into rotation behind the dial (1) and comprising an end portion (18) visible in the dial periphery (1), and means (15, 16) for driving both elements (5, 8) into rotation, **characterized in that** the visible end portion of the reference velocity indicating element supports a set of LED diodes arranged along a small circle arc element, (7), with means (17, 13, 14) being provided for supplying the set of LED diodes (7).

2. An indicator according to claim 1, wherein the effective velocity indicating element (5) and the reference velocity indicating element (8) are driven into rotation by two concentric driving shafts (15, 16) with one single motor.

3. An indicator according to one of claims 1 and 2, wherein the reference velocity indicating element comprises a coil (11) having a coil hub (12) on which is wound a flex band (13) comprising a printed circuit for supplying the LED diodes (7).

4. An indicator according to claim 3, wherein the LED diodes (7) are supplied by the flex band (13) through a printed circuit arm (8) mounted on one of the coil (11) flanges (9, 10).

5. An indicator according to claim 1, wherein the LED diodes (7) are arranged in a light box (18).

## Patentansprüche

1. Geschwindigkeitsanzeiger, umfassend eine Vorderseite, die ein Zifferblatt (1) trägt, ein Zeigerelement zur Anzeige der effektiven Geschwindigkeit (5), das vor dem Zifferblatt in Drehung versetzt wird, ein Anzeigeelement zur Anzeige der Referenzgeschwindigkeit (8, 11, 7), das hinter dem Zifferblatt (1) in Drehung versetzt wird, und umfassend einen Endabschnitt (18), der in dem Umfang des Zifferblatts (1) sichtbar ist, und Mittel (15, 16) zum Versetzen beider Elemente (5, 8) in Drehung, **dadurch gekennzeichnet, dass** der sichtbare Endabschnitt des Anzeigeelements zur Anzeige der Referenzgeschwindigkeit einen Satz von LED-Dioden trägt, die entlang eines kleinen Kreisbogenelements (7) angeordnet sind, mit Mitteln (17, 13, 14), die für die Versorgung des Satzes von LED-Dioden (7) bereitgestellt werden.

2. Anzeiger nach Anspruch 1, wobei das Zeigerelement zur Anzeige der effektiven Geschwindigkeit (5) und das Anzeigeelement zur Anzeige der Referenzgeschwindigkeit (8) durch zwei konzentrische Antriebswellen (15, 16) mit einem einzigen Motor in Drehung versetzt werden.

3. Anzeiger nach einem der Ansprüche 1 und 2, wobei das Anzeigeelement zur Anzeige der Referenzgeschwindigkeit eine Spule (11) mit einer Spulennabe (12) aufweist, auf der ein Flexband (13) aufgewickelt ist, das eine gedruckte Schaltung für die Versorgung der LED-Dioden (7) umfasst.

4. Anzeiger nach Anspruch 3, wobei die LED-Dioden (7) durch das Flexband (13) über einen Arm einer gedruckten Schaltung (8) versorgt werden, der auf einem der Flansche (9, 10) der Spule (11) angebracht ist.

5. Anzeiger nach Anspruch 1, wobei die LED-Dioden (7) in einem Leuchtkasten (18) angeordnet sind.

## Revendications

1. Indicateur de vitesse, comprenant une face avant supportant un cadran (1), un élément de pointeur indicateur de vitesse effective (5), entraîné en rotation devant le cadran, un élément indicateur de vitesse de référence (8, 11, 7), entraîné en rotation derrière le cadran (1) et comprenant une partie d'extrémité (18) visible dans la périphérie du cadran (1) et des moyens (15, 16) pour entraîner les deux éléments (5, 8) en rotation, **caractérisé en ce que** la partie d'extrémité visible de l'élément indicateur de vitesse de référence supporte un ensemble de diodes DEL agencées le long d'un petit élément en arc de cercle (7), des moyens (17, 13, 14) étant prévus pour alimenter l'ensemble de diodes DEL (7).

2. Indicateur selon la revendication 1, dans lequel l'élément indicateur de vitesse effective (5) et l'élément indicateur de vitesse de référence (8) sont entraînés en rotation par deux arbres d'entraînement concentriques (15, 16) avec un seul moteur.

3. Indicateur selon l'une des revendications 1 et 2, dans lequel l'élément indicateur de vitesse de référence comprend une bobine (11) qui présente un moyeu de bobine (12) sur lequel est enroulée une bande flexible (13) comportant un circuit imprimé pour alimenter les diodes DEL (7).

4. Indicateur selon la revendication 3, dans lequel les diodes DEL (7) sont alimentées par la bande flexible (13) par l'intermédiaire d'un bras à circuit imprimé (8) qui est monté sur une des ailes (9, 10) de la bobine (11).

5. Indicateur selon la revendication 1, dans lequel les diodes DEL (7) sont agencées dans un boîtier lumineux (18).
